Europäisches Patentamt

European Patent Office

Office européen des brevets

(19)

(11) **EP 0 764 854 B1**

(12) **FASCICULE DE BREVET EUROPEEN**

(45) Date de publication et mention
de la délivrance du brevet:
**10.01.2001   Bulletin 2001/02**

(51) Int Cl.⁷: **G01S 13/82**, G01S 13/34

(21) Numéro de dépôt: **96401960.8**

(22) Date de dépôt: **13.09.1996**

(54) **Procédé de localisation d'un émetteur-récepteur de paquets de données et émetteur-récepteur mettant en oeuvre ce procédé**

Verfahren zur Positionsbestimmung eines Sende-Empfängers für Datenpakete und Verwendung dieses Verfahrens in einem Sende-Empfänger

Method for determining the position of an emitter-receiver for data packets and emitter-receiver using the method

(84) Etats contractants désignés:
**DE FR GB IT**

(30) Priorité:  **19.09.1995  FR 9510950**

(43) Date de publication de la demande:
**26.03.1997   Bulletin 1997/13**

(73) Titulaire: **THOMSON-CSF**
**75008 Paris (FR)**

(72) Inventeur: **Hethuin, Serge, Thomson-CSF, SCPI**
**92402 Courbevoie-Cedex (FR)**

(74) Mandataire: **Courtellemont, Alain et al**
**Thomson-CSF Propriété Intellectuelle,**
**13, Avenue du Président Salvador Allende**
**94117 Arcueil Cédex (FR)**

(56) Documents cités:
**EP-A- 0 324 564**          **EP-A- 0 573 321**
**GB-A- 2 243 739**          **US-A- 4 072 946**

EP 0 764 854 B1

**Description**

La présente invention se rapporte à la localisation d'un émetteur-récepteur de paquets de données et plus particulièrement à une mesure de distance entre deux émetteurs-récepteurs de paquets de données ; elle a pour cadre les réseaux où la transmission de données se fait par paquets comportant un en-tête à une première fréquence porteuse suivi d'un champ d'informations à une seconde fréquence porteuse qui varie selon une rampe linéaire.

La connaissance, par tous les postes émetteurs-récepteurs du réseau de la distance qui les sépare des autres postes du réseau permet d'optimiser le fonctionnement du réseau, en particulier en adaptant les débits d'information à la distance entre les deux postes d'une liaison à effectuer. Cette connaissance des distances peut, bien entendu, être également exploitée à d'autres fins que le fonctionnement du réseau, par exemple à la localisation précise d'un poste B par un poste A si le poste A connaît sa propre position avec précision et sait quelle est la route que parcourt le poste B.

Pour connaître cette distance il est possible d'adjoindre à chaque poste émetteur-récepteur une installation radar mais il s'agit là d'une solution bien trop onéreuse pour pouvoir être retenue à moins que l'installation radar ne soit pas prévue uniquement pour une mesure de distance entre un poste du réseau et les autres postes du réseau. De plus, pour des antennes de prix comparables, la puissance d'émission nécessaire à une installation radar pour obtenir en retour, d'une distance donnée, un signal de niveau donné, est bien supérieure à la puissance d'émission nécessaire à un poste émetteur pour qu'un poste récepteur, situé à cette même distance donnée, reçoive un signal ayant cette même puissance donnée.

La mesure de distance peut également être faite dans un réseau si tous les postes sont capables de fournir à tout moment les coordonnées de leur position mais, pour avoir une mesure de distance précise, il faut que chaque poste soit capable de fournir ses coordonnées avec précision, ce qui nécessite de lui adjoindre un matériel de relevé de position d'autant plus coûteux que la précision recherchée sera grande.

L'invention a pour but d'éviter ou pour le moins, de réduire ces inconvénients.

Ceci est obtenu par une mesure de distance sélective et coopérative où un poste A qui désire mesurer la distance qui le sépare d'une poste B, envoie un message d'interrogation au poste B; du temps qui s'écoule entre l'envoi du message et la réception de la réponse correspondante, en provenance du poste B, le poste A déduit la distance recherchée.

Selon la présente invention il est proposé un procédé de localisation d'un émetteur-récepteur, fournissant une distance, caractérisé en ce qu'il est conçu pour mesurer les distances entre les postes émetteurs-récepteurs d'un réseau dans lequel des données sont transmises par paquets comportant un en-tête à une première fréquence porteuse suivi d'un champ d'informations à une seconde fréquence porteuse qui varie selon une rampe linéaire et en ce qu'il consiste, successivement - dans un premier des postes, à émettre un paquet d'interrogation comportant la désignation d'un second des postes - dans le second des postes, quand le paquet d'interrogation est reçu, à émettre un signal de réponse sur une troisième fréquence porteuse qui varie selon la rampe linéaire, en continuité de la seconde fréquence porteuse du paquet d'interrogation reçu - et, dans le premier des postes quand le signal de réponse est reçu, à mesurer la fréquence de battement entre la deuxième et la troisième fréquence porteuse.

La présente invention sera mieux comprise et d'autres caractéristiques apparaîtront à l'aide de la description ci-après et des figures s'y rapportant qui représentent :

- la figure 1, un diagramme des temps relatif à un paquet du type de ceux employés dans l'invention,
- la figure 2, un diagramme des temps relatif à une mesure de distance selon l'invention,
- la figure 3, le schéma d'un poste émetteur-récepteur, ce schéma étant limité aux circuits utilisés pour émettre un signal d'interrogation et traiter le signal de réponse correspondant,
- et la figure 4, le schéma d'un poste émetteur-récepteur, ce schéma étant limité aux circuits utilisés pour recevoir un signal d'interrogation et émettre en retour un signal de réponse.

Sur les différentes figures les éléments correspondants sont désignés par les mêmes repères.

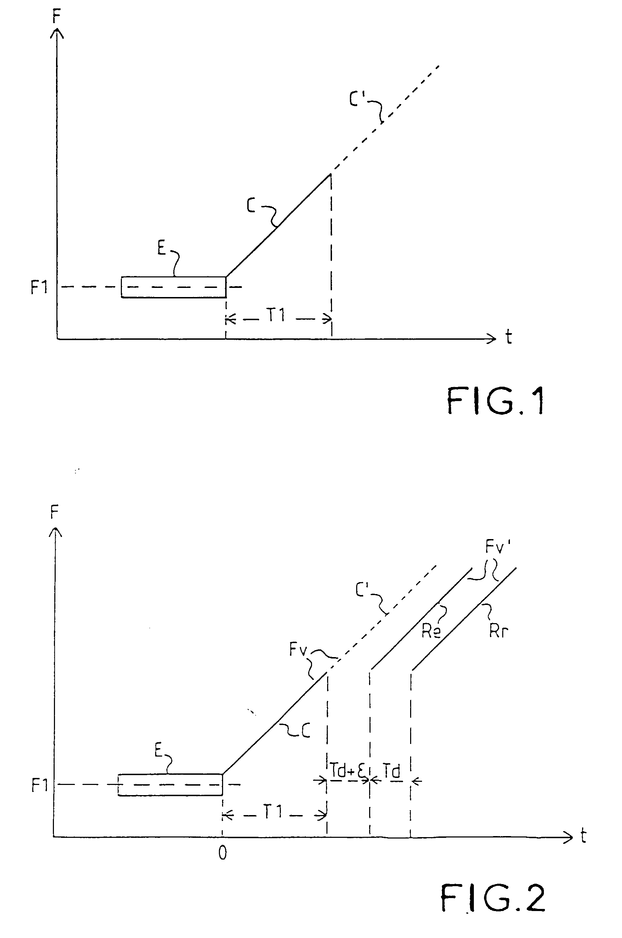

La figure 1 est un diagramme schématique fréquence/temps, montrant comment, dans le cadre de l'invention, est émis un paquet

Le paquet comporte un en-tête E, suivi d'un champ d'informations C.

L'en-tête est transmis sur une fréquence porteuse fixe F1 et occupe un canal de transmission ; un rectangle symbolise, sur la figure 1, les limites en temps et en fréquences entre lesquelles est émis l'en-tête considéré.

Le champ d'informations C est transmis sur une fréquence porteuse Fv qui varie linéairement selon une rampe. Ce champ dure un temps T1 qui, dans l'exemple décrit, est fixe. Quand le champ est émis, le poste qui l'a émis continue à produire la fréquence Fv, selon la rampe linéaire ; c'est le signal C' représenté en pointillés sur la figure 1 ; l'intérêt de ce signal C', à usage interne au poste considéré, va apparaître dans ce qui suit.

La figure 2 est un diagramme schématique fréquence/temps montrant l'échange de signaux lors d'une mesure de distance selon l'invention, entre deux postes émetteurs-récepteurs A et B d'un même réseau.

Dans l'exemple décrit c'est le poste A qui désire connaître la distance qui le sépare du poste B. Pour cela le poste A élabore un paquet E, C qui sera dit paquet d'interrogation et prolonge ce paquet par un signal C' à usage interne, comme indiqué sur la figure 1. L'adresse du poste B destinataire et l'information selon laquelle le paquet E,C est destiné à permettre une mesure, peuvent être contenues soit dans l'en-tête, soit dans le champ d'informations C; dans l'exemple décrit l'adresse est contenue dans l'en-tête et une information de mode de synchronisation qui sera décrite plus loin, est disposée en début de champ.

Le paquet émis par le poste A est reçu par les autres postes du réseau situés dans le diagramme de rayonnement du poste A; ce signal est analysé pour la recherche de synchronisation. De manière classique en transmission par paquets, lorsqu'un pic de corrélation est détecté, l'analyse des pics suivants, pendant un intervalle de temps donné, est effectuée de manière à déterminer l'instant optimal de synchronisation; cet instant optimal de synchronisation est élaboré par des traitements qui seront décrits plus loin. Chacun des postes synchronisés décode alors l'adresse contenue dans l'en-tête et seul le poste B qui reconnaît sa propre adresse dans l'en-tête du paquet, traite le champ d'informations C qui suit l'en-tête E.

Outre l'information selon laquelle le paquet est destiné à permettre une mesure, le champ C, de durée T1, peut comporter d'autres informations destinées au poste B.

Sur la figure 2 l'origine des temps, t=0, est placée à la fin de l'en-tête E.

Au temps T1 le poste A arrête sa rampe et cette fin de rampe est reçue en T1+Td par le poste B ; Td correspond au temps de propagation sur la distance d qui sépare A de B. La synchronisation du poste B sur le signal reçu du poste A est réalisée avec un manque de précision $\varepsilon$, où $\varepsilon$ est une durée positive ou négative. Au temps T1+Td+$\varepsilon$ le poste B émet un signal Re à une fréquence porteuse Fv'; ce signal constitue, à l'erreur de synchronisation $\varepsilon$ près, la suite, selon la même rampe linéaire, du signal à fréquence porteuse contenu dans le champ d'informations reçu du poste A. Le signal Re est, dans l'exemple décrit, non modulé ; il peut, en variante, contenir des informations destinées au poste A, pour exemple un code convenu entre les postes A et B pour que le poste A ait la certitude que le signal Re est bien émis par le poste B.

Au temps (T1+Td+$\varepsilon$)+Td=T1+2Td+$\varepsilon$ le poste A commence à recevoir le signal émis Re par le poste B; sur la figure 2 le signal Re, au moment de sa réception par le poste A, est représenté par une rampe Rr.

Dans le poste A, le signal Rr est mélangé avec le signal C' généré, comme il a été décrit à l'aide de la figure 1, par le poste A.

Le signal Rr est donc reçu avec un retard 2Td+$\varepsilon$ par rapport au signal C' c'est-à-dire par rapport au prolongement de la fréquence porteuse du champ d'informations C'.

Le mélange, dans le poste A des signaux C' et Rr, donne une fréquence de battement

$$f=p.(2Td+\varepsilon)$$

où p est la pente, exprimée en unités de fréquence par unités de temps, des signaux C' et Rr.

La mesure de la fréquence de battement f permet de déduire la valeur de la distance d entre les deux postes avec une erreur relative égale à $\varepsilon$/2Td.

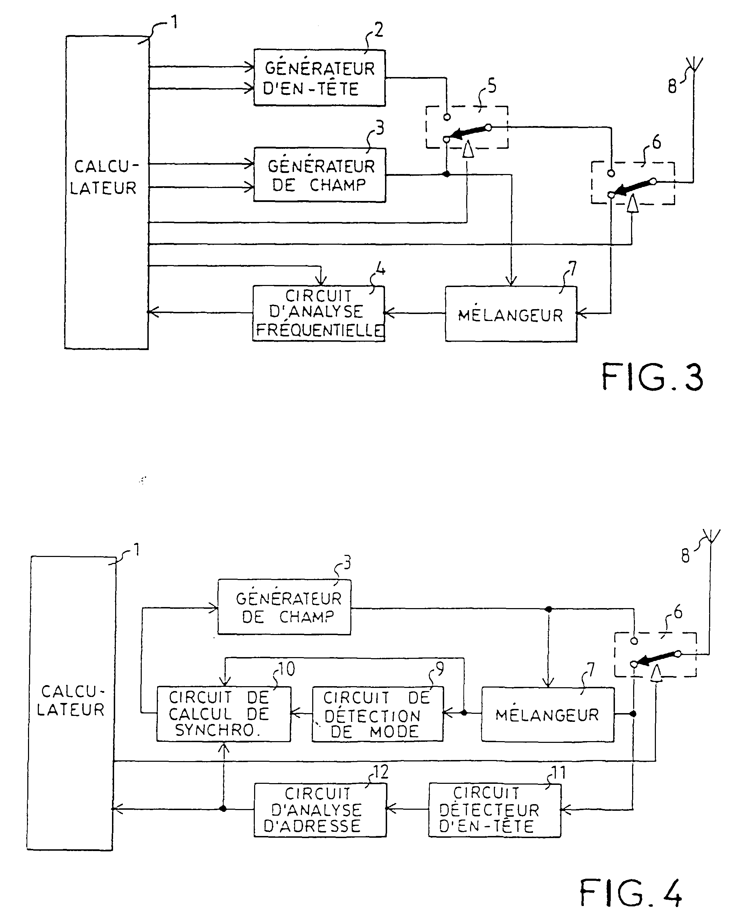

Le procédé de mesure de distance qui vient d'être décrit peut être mis en oeuvre sans modification de structure dans un poste émetteur-récepteur pour la transmission par paquets constitués d'un en-tête à fréquence porteuse fixe suivi d'un champ d'informations dont la fréquence porteuse varie selon une rampe linéaire. Néanmoins il est indiqué à l'aide de la figure 3 quelles parties d'un poste A sont employées pour interroger et traiter le signal de réponse et, à l'aide de la figure 4, quelles parties d'un poste B sont employées pour recevoir l'interrogation et y répondre. Ces schémas partiels correspondent à l'exemple de réalisation dans lequel l'adresse du destinataire est indiquée dans l'en-tête du paquet d'interrogation ainsi que l'information de mode mesure signifiant que le paquet est un paquet d'interrogation ; le champ d'informations est, toujours dans l'exemple décrit, constitué par une fréquence pure ; il est également possible d'insérer l'information de mode de mesure dans le début du champ, cela permet de réduire la longueur de l'en-tête et donc de diminuer les risques de collisions entre les paquets.

Les postes A et B étant identiques dans l'exemple décrit, certains circuits sont désignés par les mêmes références dans les schémas partiels des figures 3 et 4; ce sont les circuits qui se correspondent dans ces deux postes.

Le schéma selon la figure 3 représente un calculateur 1 qui commande un générateur d'en-tête 2, un générateur de champ d'informations 3, un circuit d'analyse fréquentielle 4 et deux commutateurs 5, 6 et reçoit les signaux de sortie du circuit 4.

Le générateur d'en-tête a sa sortie reliée à la première borne du commutateur 5 dont le point milieu est relié à la première borne du commutateur 6; le point milieu du commutateur 6 est relié à une antenne d'émission-réception 8. Un mélangeur 7 a une première entrée reliée à la seconde borne du commutateur 6 et une seconde entrée reliée à la fois à la seconde borne de commutateur 5 et à la sortie du générateur de champ 3. La sortie du mélangeur 7 est reliée, à travers le circuit d'analyse fréquentielle 4, au calculateur 1.

Pour l'émission du paquet E, C selon les figures 1 et 2, le calculateur fournit au générateur d'en-tête 2 l'information de mode mesure, l'adresse du poste destinataire et un signal de départ d'en-tête. Le calculateur fournit au générateur de champ 3, une information de mode de synchronisation à insérer dans le champ d'informations et un signal de départ de champ ; le rôle de l'information de mode de synchronisation sera précisé après la description de la figure 4. De plus le calculateur 1 commande le passage en position haute du commutateur 5 pour le temps nécessaire à l'émission de l'entête E, le passage en position basse du commutateur 5, pour le temps nécessaire à l'émission du champ C, le passage du commutateur 6 en position haute pour le temps nécessaire à l'émission du paquet E, C et le passage du commutateur 6 en position basse dès que l'émission du paquet E, C est terminée. Cette position basse du commutateur 6 qui est d'ailleurs la position représentée sur la figure 3, correspond à l'utilisation en récepteur du poste émetteur-récepteur.

Quand le signal Rr selon la figure 2 est reçu, par le poste A, le mélangeur 7 selon la figure 3 effectue le mélange de ce signal Rr avec le signal C' produit, à usage interne, dans le poste A. Comme il a été décrit à l'aide de la figure 2, ces signaux Rr et C' donnent, par mélange, une fréquence de battement f; cette fréquence de battement est analysée dans le circuit d'analyse fréquentielle 4 qui est commandé en mode de synchronisation par le calculateur 1 et ce dernier reçoit la valeur de la fréquence f dont il déduit la valeur de la distance d qui sépare les postes A et B.

Le schéma selon la figure 4 représente les circuits du poste B qui sont employés pour recevoir le paquet d'interrogation E, C du poste A et envoyer le signal de réponse, Re, à ce paquet. Le schéma représente le calculateur 1 qui commande le commutateur 6.

Le commutateur 6 a sa première borne reliée à la sortie du générateur de champ 3; en réalité cette liaison se fait à travers le commutateur 5 selon la figure 3 mais comme ce commutateur est en permanence en position haute lorsque le poste B répond a une interrogation, il a été remplacé par un court-circuit.

La deuxième borne du commutateur 6 est reliée, via un circuit détecteur d'en-tête 11, suivi d'un circuit d'analyse d'adresse 12, à une première entrée d'un circuit de calcul de synchronisation 10, et au calculateur 1. La deuxième borne du commutateur 6 est également reliée à la première entrée du mélangeur 7 qui reçoit sur sa deuxième entrée le signal de sortie du générateur de rampe 3. Ce mélangeur 7 a sa sortie reliée directement à une deuxième entrée du circuit de calcul de synchronisation 10 et, à travers un circuit de détection de mode de synchronisation 9, à une troisième entrée du circuit 10. La sortie du circuit 10 est reliée à une entrée de synchronisation du générateur de rampe 3.

Le point milieu du commutateur 6 est relié à l'antenne 8.

Quand le poste B reçoit un paquet, quel qu'il soit, son circuit 11 détecte l'en-tête du paquet et le circuit 12 analyse cet en-tête afin d'en fournir le contenu au calculateur 1 et au générateur de champ si l'en-tête contient l'adresse du poste B.

Les signaux fournis par le circuit 12 permettent d'effectuer une synchronisation grossière du générateur de champ 3 sur la fréquence porteuse du champ du paquet reçu ; ceci est possible du fait que tous les paquets sont construits selon un format constant et qu'en particulier l'adresse du destinataire dans l'en-tête est séparée du début du champ par une durée fixe, la même pour tous les paquets. Le générateur de champ peut donc commencer à se synchroniser sur l'en-tête du paquet reçu et son signal de sortie est envoyé, tant que l'interrupteur 6 est en position basse, vers le mélangeur 7 où il est mélangé avec le signal reçu par l'antenne 8.

Le signal de sortie du mélangeur permet au circuit 9 de détection de mode de synchronisation la démodulation des informations contenues dans le champ d'informations et notamment la restitution de l'information de mode de synchronisation donnant le type de traitement pour trouver la synchronisation ; avec les signaux qu'il reçoit des circuits 9 et 12 le circuit 10 élabore tout d'abord une synchronisation sur en-tête permettant d'initialiser le calage du générateur de champ 3; avec les signaux qu'il reçoit des circuits 7 et 9 le circuit 10 effectue un calcul de synchronisation fine permettant de réduire la valeur $\varepsilon$ dont il a été question lors de la description de la figure 2 et donc de corriger le calage du générateur de champ 3.

Le calculateur commande le basculement de position basse en position haute du commutateur 6, s'il a reçu par le circuit 12 l'adresse du poste B dont il fait partie ; et cette commande de basculement est envoyée par le calculateur avec un retard correspondant à l'intervalle de temps qui sépare l'adresse dans l'en-tête E de la fin du champ C. A partir de ce basculement le poste B émet le signal Re qui a été décrit à l'aide de la figure 2.

La remarque qui suit concerne les modes de synchronisation dont il a été question plus avant. A partir de l'en-tête, le poste B va trouver un certain nombre de pics de corrélation correspondant aux différents chemins ou multi-trajets impliqués dans la communication entre A et B. L'un des modes de synchronisation consiste à prendre le pic le plus énergétique. Dans ce cas, le poste A indique au poste B, grâce à des informations transmises dans la première partie du champ, que ce mode de synchronisation est celui à prendre en compte. Un second mode de synchronisation consiste à prendre la moyenne barycentrique des échos reçus par le poste B. Dans ce cas aussi, le poste A indique au poste B que ce traitement est celui à appliquer. Il existe d'autres modes de synchronisation et de manière générale c'est le poste A, celui qui effectue la mesure de distance, qui stipule au poste B le mode de synchronisation à adopter. Le poste A utilise en conséquence un algorithme de traitement sur le signal de battement, identique à celui utilisé dans le poste B.

En ce qui concerne toujours la synchronisation, le poste B peut, dans certaines applications, se servir uniquement de l'en-tête et les circuits 7, 9 et 10 de la figure 4 ne sont pas mis en oeuvre. Par contre, dans l'exemple décrit, le poste B se sert du champ C émis par A pour affiner la synchronisation obtenue sur l'en-tête. A cet effet, le champ C est du type porteuse pure, c'est-à-dire sans modulation, à l'exception du début qui peut contenir un certain nombre d'informations dont l'adresse du destinataire. Pour déterminer la correction supplémentaire à appliquer au calage de synchronisation, il faut calculer l'écart de fréquence résiduel donné par le battement entre la rampe de fréquence du champ reçu et la rampe interne déclenchée à partir du top de synchronisation obtenu sur l'en-tête. L'écart de fréquence est alors converti en une correction de temps positive ou négative et le calage de synchronisation est alors augmenté ou diminué d'autant. La correction de synchronisation trouvée sert à corriger le générateur de champ dans la valeur de sa fréquence instantanée. Ainsi, il apparaît un petit décrochement vers le haut si la rampe de fréquence du générateur est jugée en retard ou un blocage en fréquence, le temps d'attendre la fréquence nominale, si la rampe est jugée en avance.

Il est à noter, par ailleurs, que la précision de mesure de distance n'est valable que si le calage de synchronisation est suffisamment efficace et si la dérive entre l'émetteur et le récepteur est acceptable ou estimable et corrigeable. Le terme dérive désigne ici la différence de points de départ de la rampe de fréquence du signal reçu et de la rampe de fréquence du récepteur. Dans la mesure où la génération de ces rampes de fréquence est faite de manière numérique, assurant ainsi la stricte conformité entre la pente de la rampe de fréquence de l'émetteur et la pente de la rampe de fréquence du récepteur, seuls des écarts totaux permanents en fréquence, dits offsets en fréquence, sont à considérer. Pour supprimer l'offset existant entre l'onde du signal reçu et celle du récepteur, il est possible d'émettre, en fin d'en-tête, une fréquence pure qui est alors reçue par le poste B et qui par différence avec l'oscillateur local du poste B permet la détermination par B de l'écart de fréquence. Cet écart de fréquence peut d'une part être utilisé pour corriger le calage du générateur de champ et d'autre part être envoyé au poste A pour être pris en compte au niveau du traitement effectué par A.

Au sujet des en-têtes il est à remarquer que, lorsqu'ils sont courts, le poste A peut être amené à donner l'adresse du poste B concerné non pas dans l'en-tête E mais dans la toute première partie du champ d'informations C. Dans ce cas, tous les postes qui ont réussi à se synchroniser démodulent la première partie du champ et seul le poste B dont l'adresse est contenue dans ce champ continuera le traitement de la fin du champ.

La durée T1 du champ C selon les figures 1 et 2 peut être définie au mieux en fonction de l'application. En particulier, T1 peut être fixé à 0 pour laisser le maximum de temps pour la mesure de distance. Dans ce cas spécifique, l'adresse du mobile B est, bien entendu, transmise obligatoirement dans l'en-tête.

**Revendications**

1. Procédé de localisation d'un émetteur-récepteur, fournissant une distance, caractérisé en ce qu'il est conçu pour mesurer les distances entre les postes émetteurs-récepteurs d'un réseau dans lequel des données sont transmises par paquets comportant un en-tête (E) à une première fréquence porteuse (F1) suivi d'un champ d'informations (C) à une seconde fréquence porteuse (Fv) qui varie selon une rampe linéaire et en ce qu'il consiste, successivement ; dans un premier des postes, à émettre un paquet d'interrogation comportant la désignation d'un second des postes ; dans le second des postes, quand le paquet d'interrogation est reçu, à émettre un signal de réponse (Re) sur une troisième fréquence porteuse (Fv') qui varie selon la rampe linéaire, en continuité de la seconde fréquence porteuse du paquet d'interrogation reçu ; et, dans le premier des postes quand le signal de réponse est reçu (Rr), à mesurer la fréquence de battement entre la deuxième et la troisième fréquence porteuse.

2. Procédé selon la revendication 1, caractérisé en ce qu'il consiste à synchroniser, dans le second des postes, le signal de réponse (Re) seulement sur l'en-tête (E) du paquet d'interrogation.

3. Procédé selon la revendication 1, caractérisé en ce qu'il consiste à synchroniser, dans le second des postes, le signal de réponse (Re) sur l'en-tête (E) puis sur le champ (C) du paquet d'interrogation.

4. Procédé selon la revendication 1, caractérisé en ce que la désignation du second des postes est une information inscrite dans l'en-tête (E) du paquet d'interrogation.

5. Procédé selon la revendication 1, caractérisé en ce que la désignation du second des postes est une information inscrite dans le début du champ (C) du paquet d'interrogation.

6. Réseau d'émetteurs-récepteurs de paquets de données, lesdits paquets de données comportant un en-tête (E) suivi d'un champ d'informations (C) à une fréquence porteuse (Fv) qui varie selon une rampe linéaire et ledit réseau comportant au moins un premier poste et un second poste émetteur-récepteur mettant en oeuvre le procédé de localisation de l'une des revendications 1 à 5.

**Patentansprüche**

1. Verfahren zur Positionsbestimmung eines Sender/Empfängers, das einen Abstandswert liefert, dadurch gekennzeichnet, daß es zur Messung des Abstands zwischen den Sender/Empfängern eines Netzes ausgebildet ist, in dem Daten in Form von Paketen mit einem Vorspann (E) bei einer ersten Trägerfrequenz (F1) und einem nachfolgenden Informationsfeld (C) bei einer zweiten Trägerfrequenz (Fv) übertragen werden, die gemäß einer linearen Rampe variiert, und daß das Verfahren nacheinander darin besteht, daß ein erstes Gerät ein Anfragepaket mit der Bezeichnung eines zweiten Geräts aussendet, daß das zweite Gerät, wenn es das Anfragepaket empfangen hat, ein Antwortsignal (Re) auf einer dritten Trägerfrequenz (Fv'), die gemäß der linearen Rampe variiert, im Anschluß an die zweite Trägerfrequenz des empfangenen Anfragepakets aussendet und daß im ersten Gerät nach Empfang des Antwortsignals (Rr) die Schwebungsfrequenz zwischen der zweiten und der dritten Trägerfrequenz gemessen wird.

2. Verfahren nach Anspruch 1, dadurch gekennzeichnet, daß es darin besteht, im zweiten Gerät das Antwortsignal (Re) nur auf den Vorspann (E) des Anfragepakets zu synchronisieren.

3. Verfahren nach Anspruch 1, dadurch gekennzeichnet, daß es darin besteht, im zweiten Gerät das Antwortsignal (Re) auf den Vorspann (E) und dann auf das Feld (C) des Anfragepakets zu synchronisieren.

4. Verfahren nach Anspruch 1, dadurch gekennzeichnet, daß die Bezeichnung des zweiten Geräts eine Information ist, die in den Vorspann (E) des Anfragepakets eingetragen wird.

5. Verfahren nach Anspruch 1, dadurch gekennzeichnet, daß die Bezeichnung des zweiten Geräts eine Information ist, die in den Anfang des Felds des Anfragepakets eingetragen wird.

6. Netz von Sendern/Empfängern für Datenpakete, wobei die Pakete einen Vorspann (E) enthalten, auf den ein Informationsfeld (C) bei einer Trägerfrequenz (Fv) folgt, die gemäß einer linearen Rampe variiert, wobei das Netz mindestens ein erstes und ein zweites Sende/Empfangsgerät besitzt, die das Verfahren zur Positionsbestimmung nach einem der Ansprüche 1 bis 5 durchführen.

**Claims**

1. A method for the localization of a transceiver, supplying a distance, characterized in that it is designed to measure the distances between the transceiver stations of a network in which data are transmitted in packets comprising a header (E) at a first carrier frequency (F1) followed by an information field (C) at a second carrier frequency (Fv) which varies according to a linear ramp, and in that it consists, successively; at a first one of the stations, in sending an interrogation packet comprising the designation of a second one of the stations; in the second of the stations, when the interrogation packet is received, in sending a response signal (Re) at a third carrier frequency (Fv'), which varies according to the linear ramp, in continuity with the second carrier frequency of the interrogation packet received; and in the first of the stations, when the response signal is received (Rr), in measuring the beat frequency between the second carrier frequency and the third carrier frequency.

2. A method according to Claim 1, characterized in that it consists of the synchronization, in the second of the stations, of the response signal (Re) only with the header (E) of the interrogation packet.

3. A method according to Claim 1, characterized in that it consists of the synchronization, in the second of the stations, of the response signal (Re) with the header (E) and then with the field (C) of the interrogation packet.

4. A method according to Claim 1, characterized in that the designation of the second of the stations is an item of information entered in the header (E) of the interrogation packet.

5. A method according to Claim 1, characterized in that the designation of the second of the stations is an item of information entered at the beginning of the field (C) of the interrogation packet.

6. A network of transceivers of data packets, said data packets comprising a header (E) followed by an information field (C) at a carrier frequency (Fv) which varies according to a linear ramp and said network comprising at least a first transceiver station and a second transceiver station implementing the localization method of one of Claims 1 to 5.

FIG.1

FIG.2

7

FIG.3

FIG.4